# FASCICULE DE BREVET EUROPEEN

(11) **EP 1 698 867 B1**
(45) Date de publication et mention de la délivrance du brevet: **29.04.2015**
(21) Numéro de dépôt: 05077629.3
(22) Date de dépôt: 18.11.2005
(51) Int. Cl.: G01F 23/58, G01F 23/64, B60T 17/22, H01H 1/00

(54) **Système de détection de niveau de liquide**
System zur Erfassung von Flüssigkeitspegeln
System for detecting liquid level

(30) Priorité: 02.12.2004 FR 0412916
(43) Date de publication de la demande: 06.09.2006
(73) Titulaire: ROBERT BOSCH GMBH, 70442 Stuttgart (DE)
(72) Inventeur: Lenczner, Sylvain, 75020 Paris (FR); L'Aot, Jean-Michel, 93200 Saint-Denis (FR); Justaman, Aurélien, 75020 Paris (FR)

(56) Documents cités:
- FR-A- 1 559 022
- US-A- 2 450 450
- US-A- 3 813 941

## Description

L'invention concerne un système de contrôle de la continuité électrique du circuit de détection du niveau de liquide de frein d'un véhicule.

Les véhicules automobiles sont maintenant en principe équipés de systèmes permettant de détecter un niveau de liquide de frein lorsque celui-ci descend au dessous d'un niveau minimal et permettant de donner un signal d'alarme au conducteur du véhicule. De façon générale, ces systèmes de détection sont des systèmes de détection électriques **tels que par exemple décrits dans** US-A-2 450 450 **ou** FR-A-1559022.

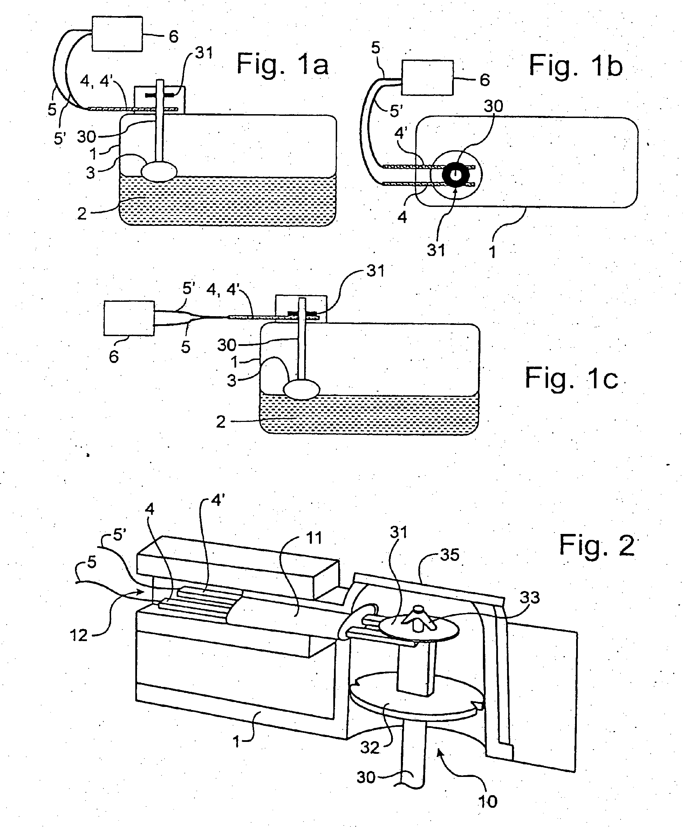

Les figures 1a à 1c représentent des schémas de principe d'un système de détection électrique d'un niveau de liquide couramment utilisé dans les réservoirs de liquide de frein des véhicules. Les figures 1a et 1c représentent des vues en coupe du réservoir, et la figure 1b représente une vue de dessus. Le réservoir 1 contenant du liquide 2 est muni d'un flotteur 3 qui flotte sur le liquide 2. Ce flotteur comporte une tige verticale 30 dont la partie supérieure est équipée d'une pièce de contact mobile conductrice de l'électricité 31. Par ailleurs, deux pièces de contact fixes 4 et 4' également conductrices de l'électricité sont disposées à la partie supérieure du réservoir. Ces pièces de contact 4 et 4' sont reliés par des fils électriques 5 et 5' à un circuit électrique 6 qui détecte la mise en continuité électrique des pièces de contact 4 et 4'. Lorsque le réservoir est convenablement rempli, le flotteur est dans une position telle que représentée sur la figure la et la pièce de contact 31 n'est pas en contact avec les pièces de contact 4 et 4'. Lorsque de niveau de liquide baisse dans le réservoir, le flotteur descend entraînant la pièce de contact 31. Celle-ci relie alors électriquement les deux pièces de contact 4 et 4'. Le circuit électrique 6 détecte l'établissement de cette continuité électrique entre les pièces de contact 4 et 4'. Le conducteur du véhicule peut donc être averti par le circuit électrique 6, à l'aide d'une signalisation d'alarme sonore et/ou lumineuse, de la baisse du niveau de liquide dans le réservoir.

Cependant, si le circuit électrique entre le circuit 6 et les pièces de contact 4 et 4' est interrompu, la signalisation d'alarme ne peut pas être fournie.

Dans la technique, il est prévu de tester ces circuits. La figure 2 représente un exemple de réalisation de la partie supérieure du réservoir et montrant notamment un dispositif permettant de faire un tel test. Sur cette figure, on voit les pièces de contact 4 et 4' qui pénètrent dans le logement 10 du réservoir. La pièce de contact 31 est susceptible d'être mise en contact avec les pièces de contact 4 et 4' lorsque le niveau de liquide dans le réservoir baisse et que le flotteur descend au dessous d'un niveau minimal. La partie supérieure du réservoir située au dessus de l'extrémité supérieure 33 de la tige 30, comporte une membrane souple 35. Un opérateur peut donc en appuyant sur cette membrane 35, faire descendre l'extrémité 33 de la tige 30 et forcer la pièce de contact 31 d'établir une continuité électrique entre les deux pièces de contact 4 et 4', ce qui doit provoquer la production de la signalisation d'alarme. Cela permet donc de tester le circuit de détection du niveau de liquide. Un tel système présente les inconvénients de nécessiter une manipulation particulière, de ne pas procurer une vérification permanente, et de nécessiter un opérateur pour appuyer sur la membrane 35 et un opérateur pour vérifier l'émission de l'alarme visuelle (dans le cas d'une alarme visuelle).

L'invention permet de résoudre tout ou partie de ces inconvénients.

L'invention concerne donc un système de contrôle de la continuité électrique du circuit de détection du niveau de liquide dans un réservoir comprenant deux pièces de contact fixes solidaires du réservoir et une pièce de contact mobile qui est susceptible d'interconnecter les deux pièces de contact fixes selon le niveau du liquide dans le réservoir. Les deux pièces de contact fixes sont connectées par un circuit à un circuit électrique de détection de la continuité électrique entre les pièces de contact fixes. De plus, une résistance électrique interconnecte les deux pièces de contact fixes.

Ladite résistance est placée dans une pièce d'étanchéité assurant l'étanchéité entre les pièces de contacts fixes et les parois d'une ouverture du réservoir dans laquelle sont placées lesdites pièces de contact fixes.

La pièce d'étanchéité possède une ouverture permettant de souder la résistance aux pièces de contact.

Selon une forme de réalisation, la pièce d'étanchéité est en deux parties permettant d'enserrer les pièces de contact et la résistance.

Selon une forme de réalisation, ladite pièce d'étanchéité est en deux parties et la résistance est placée entre ces deux parties.

Ledit circuit électrique de détection (6) permet de détecter une continuité électrique entre les deux pièces de contact fixes ainsi qu'une interruption du circuit électrique vers lesdites pièces de contact fixes.

Selon une forme de réalisation, ledit circuit électrique de détection comporte un circuit de détection de courant et permet de déclencher une alarme lorsque le courant est inférieur à un niveau déterminé correspondant à une coupure du circuit électrique vers les pièces de contact fixes, ainsi que lorsque le courant dépasse une valeur déterminée correspondant à une mise en continuité électrique des deux pièces de contact fixes par la pièce de contact mobile. **L'invention a pour objet un système de contrôle de la continuité électrique de circuit de détection, du niveau de liquide dans un réservoir tel que revendiqué dans les revendications**.

Les différents objets et caractéristiques de l'invention apparaîtront plus clairement dans la description qui va suivre et dans les figures annexées qui représentent:
- les figures 1a à 2, des dispositifs de détection de niveau de liquide connus dans la technique et décrits précédemment,
- la figure 3, un schéma de principe d'un exemple de réalisation du système selon l'invention,
- les figures 4a et 4b, un exemple de réalisation d'un dispositif appliquant l'invention,
- la figure 5, un exemple de système de détection de niveau de liquide dans un réservoir selon l'invention.

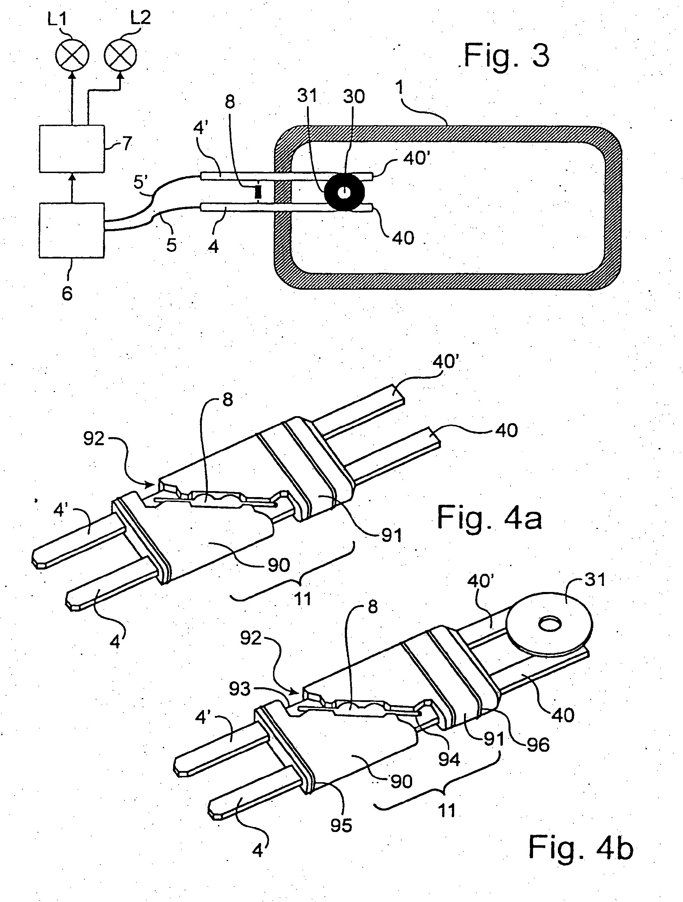

En se reportant à la figure 3, on va donc tout d'abord décrire un schéma d'un exemple de réalisation du système selon l'invention.

Comme décrit précédemment, le réservoir 1 est équipé d'un dispositif de contacts. La pièce de contact 31 est mobile en fonction du niveau de liquide dans le réservoir et est susceptible de relier électriquement les extrémités 40 et 40' des pièces de contact fixes 4 et 4'. Les pièces de contact fixes 4 et 4' se prolongent à l'extérieur du réservoir et sont connecté par des fils 5 et 5' à un circuit de détection 6. Celui-ci détecte la continuité électrique établie éventuellement entre les pièces de contact 4 et 4' par la pièce de contact 31. En cas de détection, il fournit un signal de détection au circuit d'alarme 7 qui fournit un signal d'alarme, lequel active un dispositif d'alarme tel qu'une lampe L1. Le conducteur est ainsi averti que le niveau de liquide dans le réservoir a baissé au dessous d'un minimum.

De plus, l'invention prévoit une résistance 8 de valeur déterminée qui relie les deux pièces de contact fixes 4 et 4'. Le circuit de détection 6 peut donc détecter une coupure du circuit électrique entre le circuit 6 et les pièces de contacts fixes 4 et 4'.

Le circuit 6 est, par exemple un détecteur de courant électrique. Il peut fournir un signal de détection lorsque le courant est inférieur à une valeur déterminée, et notamment lorsque sa valeur est nulle, signifiant ainsi que le circuit électrique vers les pièces de contact 4 et 4' est interrompu. Il peut également fournir un signal de détection lorsque le courant détecté est supérieur à une valeur déterminée signifiant ainsi que les extrémités 40 et 40' des pièces de contact 4 et 4' sont reliées électriquement (niveau de liquide inférieur à une valeur déterminée). Dans les deux cas, le circuit de détection 6 déclenche le fonctionnement du circuit d'alarme 7.

Selon une première forme de réalisation représenté par la figure 3, le système possède deux dispositif d'alarme L1 et L2. Le circuit de détection 6 fournit au circuit d'alarme 7 deux signaux de détection différents selon qu'il a détecté une coupure du circuit électrique vers les pièces de contact 4 et 4' ou l'établissement d'une continuité électrique entre les pièces de contacts 4 et 4'. Selon le signal de détection reçu, le circuit d'alarme déclenche le fonctionnement du dispositif d'alarme L1 ou L2.

Selon une variante de réalisation simplifiée, un seul dispositif d'alarme est prévu et le circuit de détection ne fournit qu'un seul type de signal dans les deux cas de détection.

En se reportant aux figures 4a et 4b, on va décrire un exemple de réalisation dans lequel la résistance 8 est placée à l'abri des intempéries et de la pollution.

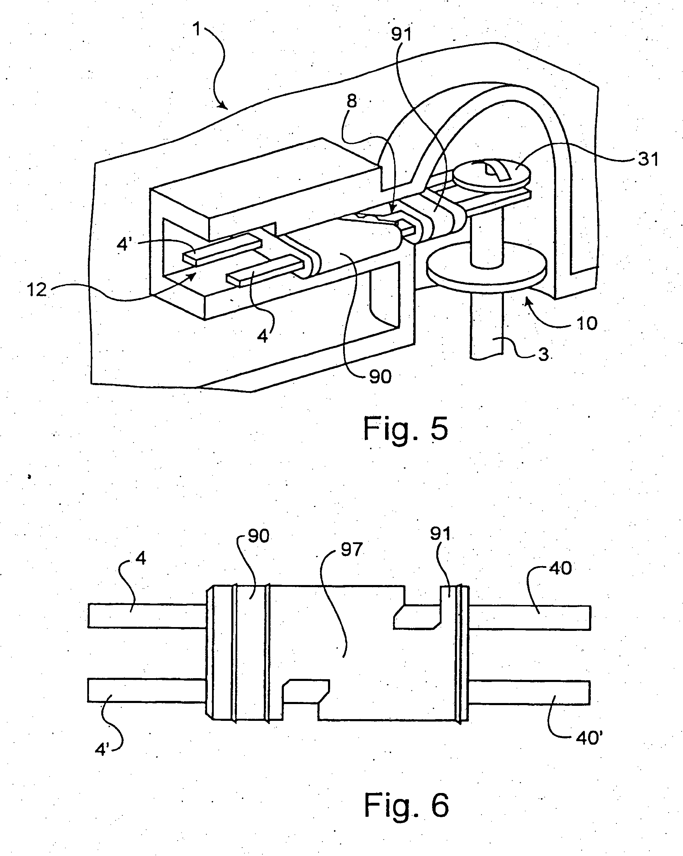

Dans l'exemple de dispositif représenté en figure 2, les pièces de contact 4 et 4' sont emprisonnées dans une pièce d'étanchéité 11. L'ensemble pièce d'étanchéité 11/pièces de contact 4-4' est placé en force dans l'ouverture 12 du boîtier 1 (figures 2 et 5). La pièce d'étanchéité 11 possède à ses deux extrémités des "renflements" 95, 96 assurant l'étanchéité entre la pièce 11 et l'ouverture 12. Pour mettre la résistance 8 à l'abri de toute pollution, on prévoit une ouverture 92 dans la pièce d'étanchéité 11. Cette ouverture permet de souder la résistance 8 aux pièces de contact 4 et 4'.

Les deux parties 90 et 91 situées de part et d'autre de l'ouverture 92 sont reliées par une partie 97 de telle façon que l'ensemble forme une seule pièce. Cet ensemble est ensuite monté en force dans l'ouverture 12. La résistance 8 est ainsi protégée en raison de la présence des bourrelets d'étanchéité 95 et 96.

On notera que l'ouverture 92 offre des surfaces 93 et 94 dégagées de matière pour permettre la soudure de la résistance 8 aux pièces de contact 4 et 4'.

L'ensemble de la pièce 11 avec ces parties constitutives 90 à 97 est surmoulé sur les pièces de contact 4 et 4'.

La figure 4b représente les pièces de contact 4 et 4' avec la pièce de contact 31 située à proximité des extrémités 40 et 40'.

Selon une variante de réalisation de l'invention, la pièce d'étanchéité 11 est surmoulée sur les pièces de contact 4 et 4' ainsi que sur la résistance 8 après que celle-ci ait été soudée aux pièces de contact 4 et 4'. Cette forme de réalisation est de préférence envisagée lorsque la soudure de la résistance 8 sur les pièces de contact 4 et 4' se fait par des soudures électriques capables de supporter sans détérioration l'échauffement dû au surmoulage.

La figure 5 représente l'ensemble du dispositif des figures 4a et 4b monté à la partie supérieure d'un réservoir.

Sur cette figure on retrouve les divers éléments décrits précédemment. On voit donc les pièces de contact 4 et 4' placées dans la cavité 12 du boîtier avec la pièce d'étanchéité 90-91-92 et avec la résistance 8 connectée aux deux pièces de contact 4 et 4' et située entre les deux parties 90 et 91 qui assurent une étanchéité comme cela a été décrit précédemment.

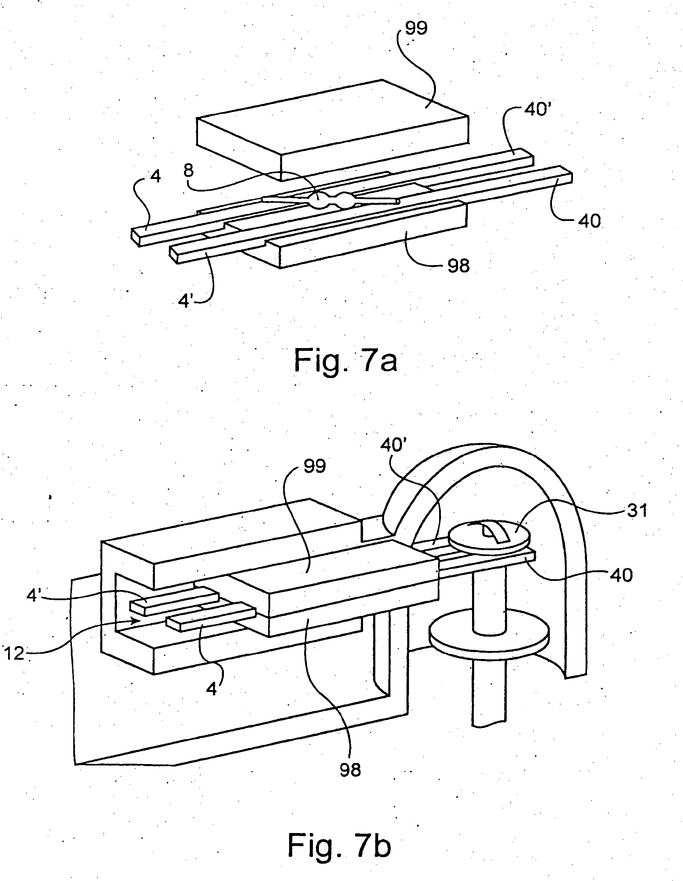

Les figures 7a et 7b représentent une variante de réalisation du montage des pièces de contact 4 et 4'.

Selon cette variante, les pièces de contact 4 et 4' ainsi que la résistance 8 sont placées antre deux pièces de maintien 98 et 99 faisant office de boîtier (voir figure 7a). Elles sont ensuite enserrées entre les deux pièces 98 et 99 et l'ensemble est monté de façon étanche dans la cavité 12.

La figure 7b montre l'ensemble ainsi monté.

L'invention permet donc un contrôle permanent et en temps réel de la continuité du circuit de détection du niveau du liquide dans le réservoir. De plus, la résistance 8 permettant ce contrôle est à l'abri de toute détérioration et de toute pollution ce qui rend ce contrôle parfaitement sûr.

## Revendications

1. Système de contrôle de la continuité électrique du circuit de détection du niveau de liquide dans un réservoir (1) comprenant deux pièces de contact fixes (4, 4') fixées au réservoir et une pièce de contact mobile (31) qui est susceptible d'interconnecter les deux pièces de contact fixes selon le niveau du liquide dans le réservoir, les deux pièces de contact fixes (4, 4') étant connectées par un circuit (5, 5') à un circuit électrique (6) de détection de la continuité électrique entre les pièces de contact fixes (4, 4'), le système de contrôle comportant une résistance électrique (8) interconnectant les deux pièces de contact fixes (4, 4'), **caractérisé en ce que** ladite résistance (8) est placée dans un dispositif d'étanchéité (11, 90, 91) assurant l'étanchéité entre les pièces de contacts fixes (4, 4') et les parois d'une ouverture (12) du réservoir dans laquelle sont placées lesdites pièces de contact fixes (4, 4'), et **en ce que** l'ensemble pièces d'étanchéité (11)/pièces de contact (4, 4') est placé en force dans l'ouverture (12) du réservoir (1) et **en ce que** la pièce d'étanchéité (11) possède à ses deux extrémités des renflements (95, 96) assurant l'étanchéité entre ladite pièce d'étanchéité (11) et l'ouverture (12) du réservoir (1) et **en ce qu'**une ouverture (92) est prévue dans ladite pièce d'étanchéité (11), pour mettre la résistance (8) à l'abri de toute pollution et permettre la soudure de la résistance (8) aux pièces de contact (4, 4').

2. Système selon la revendication 1, **caractérisé en ce que** le dispositif d'étanchéité possède deux pièces (98, 99) permettant d'enserrer les pièces de contact (4, 4') et la résistance (8).

3. Système de contrôle de la continuité électrique du circuit de détection du niveau de liquide dans un réservoir selon l'une quelconque des revendications précédentes **caractérisé en ce que** ledit circuit électrique de détection (6) comporte un circuit de détection de courant et permet de déclencher une alarme lorsque le courant est inférieur à un niveau déterminé correspondant à une coupure du circuit électrique vers les pièces de contact fixes, ainsi que lorsque le courant dépasse une valeur déterminée correspondant à une mise en continuité électrique des deux pièces de contact fixes (4, 4') par la pièce de contact mobile (31).

## Patentansprüche

1. System zur Kontrolle des Stromdurchgangs des Stromkreises zur Erfassung des Flüssigkeitspegels in einem Behälter (1), wobei das Kontrollsystem zwei feste Kontaktstücke (4, 4'), die an dem Behälter befestigt sind, und ein bewegliches Kontaktstück (31) aufweist, das die zwei festen Kontaktstücke gemäß dem Flüssigkeitspegel in dem Behälter zusammenschalten kann, wobei die zwei festen Kontaktstücke (4, 4') durch einen Stromkreis (5, 5') mit einem elektrischen Stromkreis (6) zur Erfassung des Stromdurchgangs zwischen den festen Kontaktstücken (4, 4') verbunden sind, wobei das Kontrollsystem einen elektrischen Widerstand (8) aufweist, der die zwei festen Kontaktstücke (4, 4') zusammenschaltet, **dadurch gekennzeichnet, dass** der Widerstand (8) in einer Dichtheitsvorrichtung (11, 90, 91) untergebracht ist, die die Dichtheit zwischen den festen Kontaktstücken (4, 4') und den Wänden einer Öffnung (12) des Behälters gewährleistet, in der die festen Kontaktstücke (4, 4') untergebracht sind, und dadurch, dass die Baugruppe Dichtungsteile (11)/Kontaktstücke (4, 4') unter Krafteinwirkung in der Öffnung (12) des Behälters (1) untergebracht ist, und dadurch, dass das Dichtungsteil (11) an seinen zwei Enden Wulste (95, 96) besitzt, die die Dichtheit zwischen dem Dichtungsteil (11) und der Öffnung (12) des Behälters (1) gewährleisten und dadurch, dass eine Öffnung (92) in dem Dichtungsteil (11) vorgesehen ist, um den Widerstand (8) vor jeglicher Verunreinigung zu schützen und das Schweißen des Widerstands (8) an die Kontaktstücke (4, 4') zu ermöglichen.

2. System nach Anspruch 1, **dadurch gekennzeichnet, dass** die Dichtheitssvorrichtung zwei Teile (98, 99) besitzt, die das Umklammern der Kontaktstücke (4, 4') und des Widerstands (8) ermöglichen.

3. System zur Kontrolle des Stromdurchgangs des Stromkreises zur Erfassung des Flüssigkeitspegels in einem Behälter nach einem der vorhergehenden Ansprüche, **dadurch gekennzeichnet, dass** der elektrische. Erfassungsstromkreis (6) einen Stromerfassungsstromkreis aufweist und das Auslösen eines Alarms ermöglicht, wenn der Strom niedriger als ein bestimmter Pegel ist, der einer Unterbrechung des elektrischen Stromkreises in Richtung der festen Kontaktstücke entspricht, sowie wenn der Strom einen bestimmten Wert überschreitet, der einem Instromdurchgangbringen der zwei festen Kontaktstücke (4, 4') durch das bewegliche Kontaktstück (31) entspricht.

## Claims

1. System for monitoring the electrical continuity of the circuit for detecting the liquid level in a tank (1) comprising two fixed contact parts (4, 4') fixed to the tank and one moving contact part (31) which is capable of interconnecting the two fixed contact parts according to the level of the liquid in the tank, the two fixed contact parts (4, 4') being connected by a circuit (5, 5') to an electrical circuit (6) for detecting the electrical continuity between the fixed contact parts (4, 4'), the monitoring system comprising an electrical resistor (8) interconnecting the two fixed contact parts (4, 4'), **characterized in that** said resistor (8) is placed in a sealing device (11, 90, 91) ensuring the seal-tightness between the fixed contact parts (4, 4') and the walls of an opening (12) of the tank in which said fixed contact parts (4, 4') are placed, and **in that** the sealing parts (11)/contact parts (4, 4') assembly is force-fitted into the opening (12) of the tank (1) and **in that** the sealing part (11) has, at its two ends, bulges (95, 96) ensuring the seal-tightness between said sealing part (11) and the opening (12) of the tank (1) and **in that** an opening (92) is provided in said sealing part (11), to protect the resistor (8) from all pollution and to allow the resistor (8) to be welded to the contact parts (4, 4').

2. System according to Claim 1, **characterized in that** the sealing device has two parts (98, 99) making it possible to grip the contact parts (4, 4') and the resistor (8).

3. System for monitoring the electrical continuity of the circuit for detecting the liquid level in a tank according to any one of the preceding claims, **characterized in that** said electrical detection circuit (6) comprises a current detection circuit and makes it possible to trigger an alarm when the current is below a determined level corresponding to a break in the electrical circuit to the fixed contact parts, and when the current exceeds a determined value corresponding to electrical continuity of the two fixed contact parts (4, 4') being made by the moving contact part (31).
